# FASCICULE DE BREVET EUROPEEN

(11) **EP 2 801 170 B1**
(45) Date de publication et mention de la délivrance du brevet: **24.06.2020**
(21) Numéro de dépôt: 13701814.9
(22) Date de dépôt: 03.01.2013
(51) Int. Cl.: H04L 7/10, H04L 1/16, H04L 25/02

(54) **TRANSMISSION D'ACQUITTEMENT DE COURTE DUREE**
ÜBERTRAGUNG EINER BESTÄTIGUNG VO KURZER DAUER
TRANSMISSION OF ACKNOWLEDGEMENT OF SHORT DURATION

(30) Priorité: 04.01.2012 FR 1250080
(43) Date de publication de la demande: 12.11.2014
(73) Titulaire: Orange, 75015 Paris (FR)
(72) Inventeur: CHRISTIN, Philippe, F-35000 Rennes (FR); CARIOU, Laurent, F-35000 Rennes (FR); REDIETEAB, Getachew, F-35150 Janze (FR)
(86) Numéro de dépôt international: PCT/FR2013/050004
(87) Numéro de publication internationale: WO 2013/102730

(56) Documents cités:
- WO-A1-2008/018693
- WO-A2-2008/002972
- US-A1- 2009 285 240
- US-A1- 2011 205 968
- HAOMING LI ET AL: "Multi-User Medium Access Control in Wireless Local Area Network", WIRELESS COMMUNICATIONS AND NETWORKING CONFERENCE (WCNC), 2010 IEEE, IEEE, PISCATAWAY, NJ, USA, 18 avril 2010 (2010-04-18), pages 1-6, XP031706254, ISBN: 978-1-4244-6396-1

## Description

### 1. Domaine de l'invention

Le domaine de l'invention est celui des systèmes de communication entre deux entités utilisant un canal de transmission radioélectrique, électrique ou optique, et plus particulièrement celui de l'acquittement par un terminal d'une trame de données correctement reçue.

### 2. Etat de la technique antérieure

Dans les systèmes de communication radio, courant porteur en ligne et optique sans fil, le canal de transmission est une ressource partagée et perturbée par les interférences entre les différentes entités émettrices et réceptrice partageant le canal, et par les collisions entre les différentes trames de données transitant dans le canal. Pour fiabiliser les échanges, les trames de données sont acquittées par l'entité réceptrice grâce à une trame d'acquittement destinée à l'entité émettrice, en cas de réception correcte.

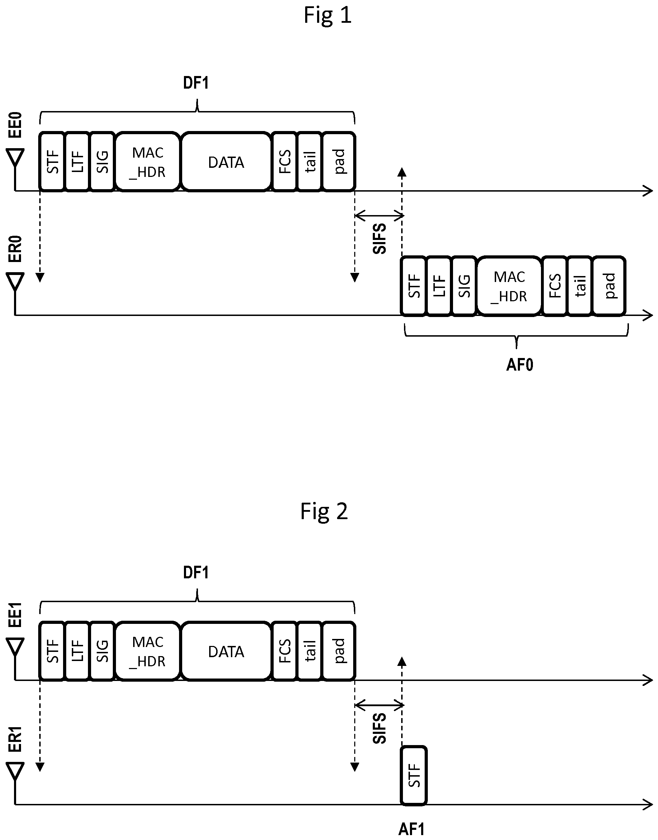

Les trames de données et les trames d'acquittement sont de même format. La **figure** 1 illustre la composition d'une trame en se basant sur l'exemple des trames de données WiFi et d'acquittement WiFi selon la norme IEEE 802.11, respectivement DF1 et AF0. Une telle trame se compose des parties suivantes :
- un entête PLCP (Physical Layer Convergence Protocol, ou protocole de convergence de la couche physique, en anglais), comprenant les champs STF (Short Training Field, ou champ de symboles d'apprentissage courts, en anglais), LTF (Long Training Field, ou champ de symboles d'apprentissage longs, en anglais) et SIG (Signal Field, ou champ de signalisation, en anglais),
- un entête MAC (Médium Access Control, ou contrôle d'accès au support, en anglais) avec, entre autres, les champs adresse MAC source et adresse MAC destination, ainsi qu'un champ indiquant le type de la trame (DATA pour une trame de données ou ACK pour une trame d'acquittement),
- les données MAC, absentes dans les trames de type ACK,
- et d'autres champs tels que FCS (Frame Check Sequence, ou séquence de vérification d'intégrité de trame, en anglais), tail (queue, en anglais), pad (padding, ou bourrage, en anglais).

Le champ STF est invariant et indique le type de protocole utilisé par la transmission, par exemple le protocole IEEE 802.11a. Le champ LTF sert en cas de synchronisation fréquentielle, et le champ SIG sert en cas de transmission OFDM (Orthogonal Frequency Division Multiplexing, ou multiplexage par division en fréquences orthogonales, en anglais).

Dans le modèle de communication OSI (Open Systems Interconnection, ou interconnexion de systèmes ouverts, en anglais) en 7 couches, utilisé par les réseaux locaux selon la norme IEEE 802.11, la sous-couche PLCP fait partie de la couche physique, qui est la première couche et la plus basse. La sous-couche MAC fait partie de la couche liaison de données, qui est la deuxième couche du modèle. En réception d'une trame, la couche physique (sous-couche PLCP) d'une entité détecte d'abord le type de trame à l'aide du champ STF. Si le type est le bon (WiFi), la couche physique démodule la trame et remonte le résultat à la couche liaison de données (sous-couche MAC). La couche liaison de données vérifie l'intégrité de la trame à l'aide du champ FCS, et selon le résultat, elle vérifie en plus si la trame est bien destinée à l'entité, à l'aide de l'entête MAC. Le mécanisme de génération de la trame d'acquittement nécessite aussi des interactions entre les deux premières couches, physique et liaison de données.

Une trame de données comporte une partie données, de taille variable allant d'environ 100 octets pour de la voix sur protocole Internet, à plusieurs kilo-octets pour de la vidéo. Selon la norme IEEE 802.11a, la transmission de 100 octets peut prendre 40µs, alors que celle d'un paquet de 1500 octets peut prendre jusqu'à 2064µs. L'ensemble des octets composant la partie MAC (entête et données) est modulé à un débit optimisé en fonction des conditions du canal de transmission.

Lors d'un acquittement, seul l'entête MAC, long de 20 octets, est modulé à un débit modéré pour sécuriser la transmission. Selon la norme IEEE 802.11a, l'occupation du canal de transmission pour cet acquittement est de l'ordre de 32µs.

Plus la modulation utilisée est robuste, plus la durée de transmission de l'acquittement sera longue. Plus sa durée est réduite, plus les chances de perte de l'acquittement augmentent, ce qui résulte en une retransmission de la trame de données initiale.

Pour les trafics à faible débit, c'est-à-dire impliquant des trames de données courtes, les trames d'acquittement représentent une part importante du trafic. C'est le cas notamment des trafics de voix sur IP et des trafics entre machines, où la bande passante occupée par les acquittements peut devenir un problème.

La demande de brevet WO 2008/018693 divulgue une trame d'acquittement de durée réduite, mais ne résout pas le problème de la fiabilité de l'attribution de cette trame à l'entité qui l'a émise.

L'entité réceptrice, lorsqu'elle effectue un acquittement des données reçues, doit donc faire un compromis entre maximiser la fiabilité de l'acquittement et minimiser l'encombrement du canal de transmission.

Il existe donc un besoin pour une solution ne présentant pas ces inconvénients.

### 3. Exposé de l'invention

L'invention vient améliorer la situation à l'aide d'un procédé d'émission d'une trame d'acquittement par une entité réceptrice, comprenant, suite à la réception d'une trame de données émise par une entité émettrice et comprenant un champ de synchronisation contenant une information invariante connue desdites entités et un champ d'identification contenant des informations identifiant ladite entité émettrice et ladite entité réceptrice, une étape d'émission par ladite entité réceptrice d'une trame d'acquittement comprenant un champ de synchronisation. Le procédé d'émission d'une trame d'acquittement comprend en outre une étape de calcul d'une signature du canal de transmission entre l'entité émettrice et l'entité réceptrice, le champ de synchronisation de la trame d'acquittement étant obtenu à partir du champ de synchronisation de la trame de données, au moyen de ladite signature.

Ceci permet d'économiser des ressources en calcul dans l'entité émettrice de la trame d'acquittement, d'accélérer l'émission de la trame d'acquittement, et de diminuer l'encombrement du canal de transmission occasionné par la trame d'acquittement. En effet, contrairement à la technique antérieure, aucune donnée rentrant dans la composition de la trame d'acquittement n'est modulée, et la taille de la trame d'acquittement est diminuée.

La signature caractérise de façon unique le canal de transmission entre les entités émettrice et réceptrice. Avantageusement, le champ de synchronisation ainsi signé permet à l'entité émettrice, destinatrice de la trame d'acquittement, de reconnaître la signature dans une trame d'acquittement et de ne pas confondre la trame avec une autre trame d'acquittement destinée à une autre entité émettrice.

Selon un aspect du procédé d'émission d'une trame d'acquittement selon l'invention, le champ de synchronisation de la trame d'acquittement comprend le champ de synchronisation de la trame de données.

Avantageusement, le champ de synchronisation inséré dans la trame d'acquittement par l'entité réceptrice est simplement identique à celui qui a été généré par l'entité émettrice, sans différenciation particulière dans la chaine de transmission.

Selon un aspect du procédé d'émission d'une trame d'acquittement selon l'invention, l'étape de calcul de la signature comprend une étape de retournement de la réponse temporelle dudit canal, enregistrée à l'aide du champ de synchronisation de la trame de données.

Ceci permet une reconnaissance particulièrement robuste de la signature par l'entité destinatrice de la trame d'acquittement, tout en conservant des informations sur l'identité de l'entité émettrice de l'acquittement, en dépit de la non-transmission du champ d'identification dans la trame d'acquittement, et sans augmenter l'encombrement du canal de transmission.

L'invention concerne aussi un procédé d'émission d'une trame de données par une entité émettrice vers une entité réceptrice, ladite trame de données comprenant un champ de synchronisation contenant une information invariante connue desdites entités et un champ d'identification contenant des informations identifiant ladite entité émettrice et ladite entité réceptrice, le procédé comprenant au moins une étape d'émission de ladite trame de données, ladite étape d'émission étant répétée avec un délai prédéterminé jusqu'à la réception, dans un intervalle temporel prédéterminé à l'intérieur dudit délai, d'une trame d'acquittement comprenant un champ de synchronisation obtenu à partir du champ de synchronisation de la trame de données, au moyen d'une signature du canal de transmission entre l'entité émettrice et l'entité réceptrice.

Dans la technique antérieure, l'entête MAC est transmise dans la trame d'acquittement afin de permettre à n'importe quelle entité du réseau recevant une trame d'acquittement, y compris et surtout des entités tiers, d'identifier quelles entités sont concernées par l'acquittement, et d'éviter une confusion entre plusieurs acquittements destinés à des entités différentes. Selon l'invention, l'entité émettrice de la trame de données, puis destinatrice de la trame d'acquittement, se fie à une synchronisation temporelle entre l'émission d'une trame de données, l'écoulement d'un délai et la réception d'une trame d'acquittement. Si la trame d'acquittement arrive à l'intérieur d'une fenêtre de temps précise à l'intérieur dudit délai, cela indique qu'elle est bien la trame d'acquittement correspondant à la trame de données. Il n'est donc pas nécessaire, comme dans la technique antérieure, de transmettre l'entête MAC dans une trame d'acquittement pour que l'entité émettrice de la trame de données reconnaisse la trame d'acquittement qui lui est destinée.

Si la synchronisation temporelle ne permet pas à une entité émettrice d'une trame de données, et destinatrice d'une trame d'acquittement, de déterminer avec certitude qu'une trame d'acquittement reçue lui est bien destinée, la signature du canal de transmission élimine avantageusement toute ambiguïté.

Selon un aspect du procédé d'émission d'une trame de données selon l'invention, le champ de synchronisation de la trame d'acquittement comprend le champ de synchronisation de la trame de données. Avantageusement, le champ de synchronisation reçu par l'entité émettrice dans la trame d'acquittement est simplement identique à celui qu'elle avait émis dans la trame de données, sans traitement particulier.

Selon un aspect de l'invention, le procédé d'émission d'une trame de données comprend en outre une étape de corrélation du champ de synchronisation de la trame d'acquittement reçue avec le champ de synchronisation de la trame de données, la répétition de l'émission de la trame de données étant inhibée en fonction du résultat de cette corrélation.

Lorsque des séquences d'information sont reçues par l'entité émettrice à l'intérieur d'un intervalle temporel attendu, elle les compare avec les séquences d'information formées par un champ de synchronisation, et mesure la dispersion du résultat de la corrélation. Si cette dispersion est faible, c'est-à-dire si le résultat de la corrélation correspond à un pic bien net, cela signifie que les séquences d'information reçues correspondent à la trame d'acquittement attendue par l'entité émettrice. Cela signifie que la trame de données qu'elle a émise a été correctement reçue, et qu'il n'est plus nécessaire de l'émettre.

Selon un aspect de l'invention, la trame d'acquittement comprend uniquement un champ de synchronisation. Ceci est avantageux dans la mesure où une telle trame d'acquittement comprenant uniquement un champ de synchronisation est d'une durée beaucoup plus courte qu'une trame d'acquittement selon la technique antérieure. En WiFi par exemple, l'occupation du canal de transmission pour un acquittement selon l'invention sera de l'ordre de 8µs, plutôt que 32µs selon la technique antérieure. Le canal de transmission est occupé moins longtemps pour les acquittements, ce qui laisse plus de place pour les données.

De plus, comme d'autres champs entrent dans la composition d'une trame d'acquittement selon la technique antérieure, il est possible pour une entité émettrice destinatrice d'une trame d'acquittement de distinguer facilement deux types d'acquittement, par trame d'acquittement courte selon l'invention, ou par trame d'acquittement longue selon la technique antérieure. Dans un réseau WiFi par exemple, utilisant à la fois les acquittements selon l'invention et selon la technique antérieure, l'absence des champs LTF et SIG, présents dans l'entête PLCP d'une trame d'acquittement longue selon la technique antérieure, indiquent à l'entité destinatrice que l'acquittement utilisé est un acquittement par trame d'acquittement courte. Une annonce préalable, au travers d'une négociation entre les entités concernées, peut être nécessaire dans le cas d'utilisation des deux types d'acquittements, longs et courts.

Selon un aspect de l'invention, l'information invariante du champ de synchronisation comprend uniquement des symboles arrangés pour synchroniser temporellement lesdites entités. Avantageusement, le champ de synchronisation est constitué de séquences de symboles sélectionnés pour leurs bonnes propriétés de différentiation (inter-corrélation) et de reconnaissance (auto-corrélation). Selon la norme IEEE 802.11 par exemple, le champ STF, qui permet d'identifier qu'une trame est une trame WiFi, est constitué de dix séquences identiques d'une durée de 0,8µs chacune.

L'invention concerne aussi un dispositif d'émission d'une trame d'acquittement par une entité réceptrice, comprenant, suite à la réception d'une trame de données émise par une entité émettrice et comprenant un champ de synchronisation contenant une information invariante connue desdites entités et un champ d'identification contenant des informations identifiant ladite entité émettrice et ladite entité réceptrice, des moyens d'émission par ladite entité réceptrice d'une trame d'acquittement comprenant un champ de synchronisation. Le dispositif d'émission d'une trame d'acquittement comprend en outre une unité de traitement apte à calculer une signature du canal de transmission entre l'entité émettrice et l'entité réceptrice, le champ de synchronisation de la trame d'acquittement étant obtenu à partir du champ de synchronisation de la trame de données, au moyen de ladite signature.

L'invention concerne aussi un dispositif d'émission d'une trame de données par une entité émettrice vers une entité réceptrice, ladite trame de données comprenant un champ de synchronisation contenant une information invariante connue desdites entités et un champ d'identification contenant des informations identifiant ladite entité émettrice et ladite entité réceptrice, le dispositif comprenant des moyens d'émission de ladite trame de données, ladite émission étant répétée après un délai prédéterminé jusqu'à la réception, dans un intervalle temporel prédéterminé à l'intérieur dudit délai, d'une trame d'acquittement comprenant un champ de synchronisation obtenu à partir du champ de synchronisation de la trame de données, au moyen d'une signature du canal de transmission entre l'entité émettrice et l'entité réceptrice.

L'invention concerne aussi un programme d'ordinateur comprenant des instructions pour la mise en œuvre du procédé d'émission d'une trame d'acquittement, lorsque ce procédé est exécuté par un processeur. L'invention concerne enfin un programme d'ordinateur comprenant des instructions pour la mise en œuvre du procédé d'émission d'une trame de données, lorsque ce procédé est exécuté par un processeur.

Ces programmes, stockés sur un support lisible par ordinateur, peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention concerne enfin un signal d'acquittement, émis par une entité réceptrice suite à la réception d'une trame de données émise par une entité émettrice, la trame de donnée comprenant un champ de synchronisation contenant une information invariante connue desdites entités et un champ d'identification contenant des informations identifiant ladite entité émettrice et ladite entité réceptrice, le signal portant une trame d'acquittement comprenant un champ de synchronisation obtenu à partir du champ de synchronisation de la trame de données, au moyen d'une signature du canal de transmission entre l'entité émettrice et l'entité réceptrice.

Par rapport à la technique antérieure, ce signal selon l'invention encombre moins le canal de transmission car sa taille est réduite et, comme sa signature caractérise de façon unique le canal de transmission entre les entités émettrice et réceptrice, il n'est pas réémis en raison d'un doute sur l'entité émettrice ou réceptrice.

L'invention est définie par les revendications annexées. Les présentations et exemples qui ne sont pas couverts par les revendications annexées ne doive être pas considérés que comme des exemples utiles à la compréhension de l'invention.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente la structure d'une trame de données et la structure d'une trame d'acquittement selon la technique antérieure,
- la figure 2 présente la structure d'une trame de données et la structure d'une trame d'acquittement selon un mode de réalisation de l'invention,
- la figure 3 présente les étapes des procédés d'émission d'une trame de données et d'émission d'une trame d'acquittement selon un premier mode de réalisation de l'invention,
- la figure 4 présente les étapes des procédés d'émission d'une trame de données et d'émission d'une trame d'acquittement selon un deuxième mode de réalisation de l'invention,
- la figure 5 présente la structure d'un dispositif émetteur d'une trame d'acquittement, selon l'invention, et
- la figure 6 présente la structure d'un dispositif émetteur d'une trame de données, selon l'invention.

### 5. Description détaillée d'au moins un mode de réalisation de l'invention

Dans la suite de la description, on considère le cas de deux modes de réalisation de l'invention par des entités communiquant entre elles par WiFi, c'est-à-dire par un canal de transmission selon la norme IEEE 802.11. L'invention ne se limite pas à ce cas, et s'applique à d'autres types de canaux de transmission tels que le courant porteur en ligne (norme IEEE 1901), ou l'optique sans fil (norme IEEE 802.15.7).

La structure d'une trame de données DF1 émise par une entité émettrice EE0 et la structure d'une trame d'acquittement AF0 émise par une entité réceptrice ER0, selon la technique antérieure, ont été présentées plus haut en référence à la figure 1.

La figure 2 présente la structure d'une trame de données et la structure d'une trame d'acquittement, selon un mode de réalisation de l'invention. Une entité émettrice EE1 émet une trame de données DF1 qui reste inchangée par rapport à la technique antérieure. Une entité réceptrice ER1 émet une trame d'acquittement après un délai SIFS compté à partir de la fin de la réception de la trame de données DF1. Le délai SIFS (Short Inter-Frame Sequence, ou espacement inter-trame court, en anglais) permet de laisser, aux entités concernées par la transmission, le temps de passer du mode émission au mode réception (et inversement).

La trame d'acquittement qui est émise selon l'invention, contrairement à la technique antérieure, est une trame d'acquittement AF1 qui comprend un champ de synchronisation basé sur le champ STF de la trame de données DF1, mais ne comprend pas certains, voire l'ensemble des autres champs de cette trame de données DF1, et en particulier ne comprend pas de champ d'identification contenant des informations identifiant l'entité émettrice EE1 et l'entité réceptrice ER1, tel qu'un entête MAC.

Ainsi, la trame d'acquittement AF1 peut comprendre le champ STF de la trame de données DF1, mais ne comprend pas de champ comprenant des données modulées, notamment l'entête MAC de cette trame de données, ce qui permet de diminuer la taille de la trame d'acquittement tout en maintenant sa fonctionnalité.

En particulier, dans le mode particulier de réalisation illustré sur la figure 2, la trame d'acquittement AF1 est une trame d'acquittement AF1 composée uniquement du champ STF de la trame de données DF1, par exemple généré localement au niveau de l'entité réceptrice ER1.

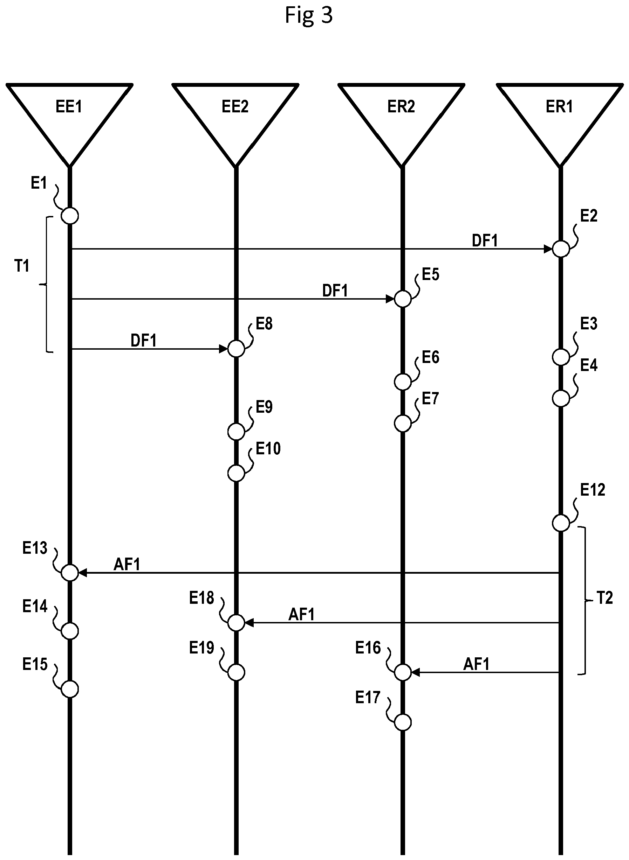

La figure 3 présente les étapes des procédés d'émission d'une trame de données et d'émission d'une trame d'acquittement selon un premier mode de réalisation de l'invention. Dans l'exemple illustré par cette figure, les entités EE1, EE2, ER1 et ER2 émettent chacune des trames WiFi qui sont toutes reçues et démodulées par toutes les entités, même si elles ne leur sont pas toutes destinées.

Plus précisément, les trames envoyées par les entités EE1 et EE2 sont destinées respectivement aux entités ER1 et ER2, et les trames envoyées par les entités ER1 et ER2 sont destinées respectivement aux entités EE1 et EE2.

Lors d'une étape E1, l'entité EE1 émet à un moment T1 une trame de donnée DF1 à destination de l'entité ER1. L'entête MAC de la trame DF1 contient l'identifiant de l'entité émettrice, EE1, et l'identifiant de l'entité réceptrice, ER1.

Lors d'une étape E2, l'entité ER1 reçoit la trame de données DF1 au niveau de sa couche physique. La couche physique reconnait grâce au champ STF placé en premier qu'il s'agit d'une trame WiFi, démodule la trame DF1, puis remonte le résultat à la couche liaison de données.

Lors d'une étape E3, la couche liaison de données vérifie l'intégrité des données à l'aide du champ FCS.

Lors d'une étape E4, la couche liaison de données vérifie à l'aide de l'entête MAC que la trame DF1 est bien destinée à l'entité ER1.

**Selon le premier mode de réalisation** de l'invention, lorsque les vérifications des étapes E3 et E4 sont positives, la couche liaison de données de l'entité ER1 instruit la couche physique d'émettre, à un moment T2 lors d'une étape E12, une trame d'acquittement AF1 constituée uniquement du champ de synchronisation, c'est-à-dire du champ STF. Contrairement à la technique antérieure, la couche physique n'utilise pas de données modulées par la couche liaison de données, telles que l'entête MAC, pour construire la trame d'acquittement. Une opération de modulation n'est donc pas nécessaire à l'émission de la trame d'acquittement, ce qui permet d'accélérer l'émission et d'économiser des ressources en calcul dans l'entité émettrice de la trame d'acquittement.

De plus, une fois reçue de la couche liaison de données l'instruction d'émettre une trame d'acquittement, seul le champ de synchronisation STF est nécessaire à la couche physique pour construire sa trame d'acquittement. Comme ce champ est invariant et connu de la couche physique, il n'est pas nécessaire que la couche liaison de données le transmette à la couche physique.

Si l'une des vérifications des étapes E3 ou E4 est négative, la couche liaison de données de l'entité ER1 ignore les données du champ DATA et n'instruit pas la couche physique d'émettre une trame d'acquittement. Dans ce cas, l'entité EE1, émettrice de la trame DF1, ne recevant pas de trame d'acquittement à l'intérieur d'un délai prédéterminé, émettra à nouveau la trame DF1 lors d'une étape ultérieure, non décrite.

L'entité ER1 n'est pas la seule entité à recevoir la trame DF1 émise à l'instant T1 lors de l'étape E1.

Lors d'une étape E5, l'entité ER2 reçoit aussi la trame de données DF1 au niveau de sa couche physique. La couche physique reconnait grâce au champ STF placé en premier qu'il s'agit d'une trame WiFi, démodule la trame DF1, puis remonte le résultat à la couche liaison de données.

Lors d'une étape E6, la couche liaison de données vérifie l'intégrité des données à l'aide du champ FCS.

Lors d'une étape E7, la couche liaison de données détermine à l'aide de l'entête MAC que la trame DF1 n'est pas destinée à l'entité ER2, et l'ignore.

Lors d'une étape E8, l'entité EE2 reçoit aussi la trame de données DF1 au niveau de sa couche physique. La couche physique reconnait grâce au champ STF placé en premier qu'il s'agit d'une trame WiFi, démodule la trame DF1, puis remonte le résultat à la couche liaison de données.

Lors d'une étape E9, la couche liaison de données vérifie l'intégrité des données à l'aide du champ FCS.

Lors d'une étape E10, la couche liaison de données détermine à l'aide de l'entête MAC que la trame DF1 n'est pas destinée à l'entité EE2, et l'ignore.

Suite à l'étape E12, lors d'une étape E13, l'entité EE1 reçoit la trame d'acquittement AF1 au niveau de sa couche physique. Sur la base du délai écoulé entre l'étape E1 et l'étape E13, l'entité EE1 sait qu'elle est en attente d'une trame d'acquittement comprenant un champ STF.

Lors d'une étape E14, l'entité EE1 calcule un score de corrélation entre la séquence d'information reçue et la séquence attendue. Si ce score dépasse un seuil prédéterminé, l'entité EE1 détermine que la trame AF1 reçue est bien la trame AF1 qui lui est destinée car elle correspond bien à un acquittement, par l'entité ER1, de la trame de données DF1.

L'entité EE1 décide donc, lors d'une étape E15, de ne pas émettre à nouveau la trame de données DF1.

L'entité EE1 n'est pas la seule entité à recevoir la trame AF1 émise à l'instant T2 lors de l'étape E12.

Lors d'une étape E16, l'entité ER2 reçoit aussi la trame d'acquittement AF1 au niveau de sa couche physique. La couche physique reconnait grâce au champ STF placé en premier qu'il s'agit d'une trame WiFi. Comme aucune autre information ne suit le champ STF dans la trame AF1, l'entité ER2 en déduit qu'il s'agit d'une trame d'acquittement.

Comme l'entité ER2 n'est pas en attente d'une trame d'acquittement dans un intervalle de temps prédéterminé suivant T2, elle détermine, lors d'une étape E17, que la trame AF1 ne lui est pas destinée, et l'ignore.

Lors d'une étape E18, l'entité EE2 reçoit aussi la trame d'acquittement AF1 au niveau de sa couche physique. La couche physique reconnait grâce au champ STF placé en premier qu'il s'agit d'une trame WiFi. Comme aucune autre information ne suit le champ STF dans la trame AF1, l'entité EE2 en déduit qu'il s'agit d'une trame d'acquittement.

Comme l'entité EE2 n'est pas en attente d'une trame d'acquittement dans un intervalle de temps prédéterminé suivant T2, elle détermine, lors d'une étape E19, que la trame AF1 ne lui est pas destinée, et l'ignore.

Lors des étapes E14, E17 et E19, respectivement les entités EE1, ER2 et EE2 peuvent déterminer si elles sont ou ne sont pas destinataires de la trame d'acquittement AF1 grâce à des règles d'occupation du canal de transmission propres à la norme utilisée, comme la norme IEEE 802.11 dans notre exemple. Ces règles empêchent l'émission simultanée ou trop rapprochée de trames par plusieurs entités, en imposant aux entités visibles les unes des autres, telles que EE1, EE2, ER1 et ER2, des délais à respecter entre la détection et l'émission d'une trame, délais qui sont propres aux types de trames et qui sont calculés de façon à éviter les collisions entre trames. Une collision est définie ici par la réception, par une entité émettrice, d'une trame d'acquittement qui ne lui est pas destinée, à l'intérieur d'un intervalle temporel attendu.

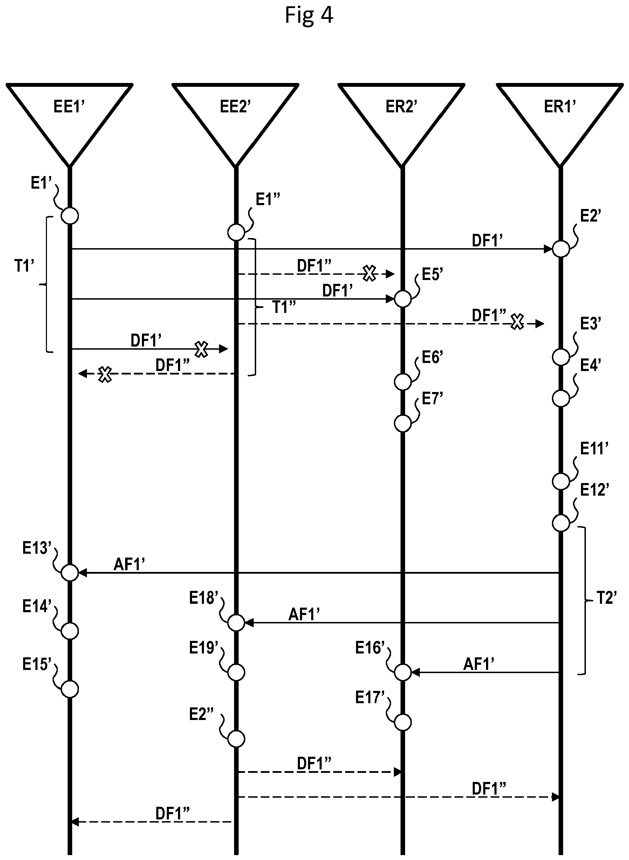

Malgré les règles d'occupation du canal de transmission, il existe des cas où des collisions de trames se produisent. Un tel cas est illustré en référence à la figure 4.

La figure 4 présente les étapes des procédés d'émission d'une trame de données et d'émission d'une trame d'acquittement selon un deuxième mode de réalisation de l'invention. Dans l'exemple illustré par cette figure, les entités EE1', EE2', ER1' et ER2' émettent chacune des trames WiFi qui sont toutes reçues par toutes les entités, même si elles ne leur sont pas toutes destinées.

Plus précisément, les trames envoyées par les entités EE1' et EE2' sont destinées respectivement aux entités ER1' et ER2', et les trames envoyées par les entités ER1' et ER2' sont destinées respectivement aux entités EE1' et EE2'.

Lors d'une étape E1', l'entité EE1' émet à un moment T1' une trame de donnée DF1' à destination de l'entité ER1'. L'entête MAC de la trame DF1' contient l'identifiant de l'entité émettrice, EE1', et l'identifiant de l'entité réceptrice, ER1'.

Lors d'une étape E2', l'entité ER1' reçoit la trame de données DF1' au niveau de sa couche physique. La couche physique reconnait grâce au champ STF placé en premier qu'il s'agit d'une trame WiFi, démodule la trame DF1', puis remonte le résultat à la couche liaison de données.

Lors d'une étape E3', la couche liaison de données vérifie l'intégrité des données à l'aide du champ FCS.

Lors d'une étape E4', la couche liaison de données vérifie à l'aide de l'entête MAC que la trame DF1' est bien destinée à l'entité ER1'.

Lorsque les vérifications des étapes E3' et E4' sont positives, la couche liaison de données de l'entité ER1' instruit la couche physique d'émettre, à un moment T2' lors d'une étape E12', une trame d'acquittement AF1' constituée d'une information basée sur le champ de synchronisation, c'est-à-dire le champ STF.

**Selon le deuxième mode de réalisation** de l'invention, l'information constituant la trame d'acquittement AF1', basée sur le champ STF, comprend une signature du canal de transmission entre les entités EE1' et ER1'. Cette signature unique permet à l'entité EE1', lorsqu'elle reçoit la trame AF1' lors d'une étape E13', de déterminer avec certitude qu'elle lui est bien destinée. De même, la signature permet à l'entité EE2', lorsqu'elle reçoit la trame AF1' lors d'une étape E18', de déterminer avec certitude qu'elle ne lui est pas destinée.

Cette signature du canal de transmission entre l'entité émettrice EE1' et l'entité réceptrice ER1' est calculée lors d'une étape E11', avant la transmission de la trame d'acquittement de l'étape E12', afin d'obtenir le champ de synchronisation de la trame d'acquittement AF1' à partir du champ de synchronisation de la trame de données DF1', au moyen de cette signature.

En particulier, la signature peut être un retournement de la réponse temporelle du canal de transmission entre les entités EE1' et ER1', enregistrée à l'aide du champ STF.

La réponse temporelle du canal sur une information reçue se définit comme l'ensemble des détections de cette information au point de réception. Cet ensemble résulte de la pluralité des chemins empruntés simultanément par l'information, depuis l'émetteur vers le récepteur de l'information. Ces chemins diffèrent en longueur, et dépendent de paramètres tels que l'emplacement, la forme et la texture des obstacles disposés entre l'émetteur et le récepteur. Comme les chemins diffèrent en longueur, les détections à l'arrivée s'étalent sur plusieurs instants. Comme les chemins diffèrent aussi en pouvoir d'atténuation, les détections à l'arrivée diffèrent en énergie. Cet ensemble de détections est enregistré par l'entité réceptrice ER1', en utilisant le champ de synchronisation STF de la trame de données DF1'. Grâce à l'enregistrement de l'ensemble des détections, l'entité ER1' est en mesure de renvoyer les détections avec la même énergie mais en inversant leur ordre chronologique. C'est ce qui définit le retournement temporel de la réponse temporelle.

Avantageusement, lorsque, lors de l'étape E13', l'entité EE1' reçoit de l'entité ER1' la trame d'acquittement AF1' signée à l'aide de cette technique de retournement temporel, les perturbations résultantes des caractéristiques physiques du canal de transmission entre les entités ER1' et EE1' sont annulées au point où se trouve l'entité EE1'. Pour l'entité EE1', non seulement la détection est unique et non plus multiple, mais elle est également de forte intensité, donc robuste, car toute l'énergie du signal est concentrée dans une seule détection et non plus dispersée dans plusieurs détections.

Comme dans le premier mode de réalisation, la couche physique n'utilise pas de données modulées ou transmises par la couche liaison de données pour construire la trame d'acquittement.

Si l'une des vérifications des étapes E3' ou E4' est négative, la couche liaison de données de l'entité ER1' ignore les données du champ DATA et n'instruit pas la couche physique d'émettre une trame d'acquittement. Dans ce cas, l'entité EE1', émettrice de la trame DF1', ne recevant pas de trame d'acquittement correspondante à l'intérieur d'un délai prédéterminé, émettra à nouveau la trame DF1' lors d'une étape ultérieure, non décrite.

L'entité ER1' n'est pas la seule entité à recevoir la trame DF1' émise à l'instant T1' lors de l'étape E1'.

Lors d'une étape E5' l'entité ER2' reçoit aussi la trame de données DF1' au niveau de sa couche physique. La couche physique reconnait grâce au champ STF placé en premier qu'il s'agit d'une trame WiFi, démodule la trame DF1', puis remonte le résultat à la couche liaison de données.

Lors d'une étape E6', la couche liaison de données vérifie l'intégrité des données à l'aide du champ FCS.

Lors d'une étape E7', la couche liaison de données détermine à l'aide de l'entête MAC que la trame DF1' n'est pas destinée à l'entité ER2', et l'ignore.

Pendant un intervalle de temps comprenant le moment T1', l'entité EE2' est cachée des autres entités, par exemple par un obstacle physique bloquant temporairement les canaux de transmission de l'entité EE2', qui ne reçoit pas la trame de données DF1' émise par l'entité EE1'.

Pendant le même intervalle de temps, à un moment T1" proche du moment T1', l'entité EE2' émet, lors d'une étape E1", une trame de données DF1". A cause de l'obstacle temporaire, cette trame DF1" n'est reçue d'aucune des autres entités. En particulier, la trame DF1" n'est pas reçue par l'entité ER2' à qui elle est destinée.

Suite à l'étape E12', lors de l'étape E13', l'entité EE1' reçoit la trame d'acquittement AF1' au niveau de sa couche physique. Sur la base du délai écoulé entre l'étape E1' et l'étape E13', l'entité EE1' sait qu'elle est en attente d'une trame d'acquittement comprenant un champ STF.

Lors d'une étape E14', l'entité EE1' calcule un score de corrélation entre la séquence d'information reçue et la séquence attendue. Si ce score dépasse un seuil prédéterminé, l'entité EE1' détermine que la trame reçue est bien la trame AF1' qui lui est destinée car elle correspond bien à un acquittement, par l'entité ER1', de la trame de données DF1'. Grâce à la signature du canal de transmission entre les entités EE1' et ER1' présente dans la trame AF1', propre à ce deuxième mode de réalisation de l'invention, le score de corrélation est augmenté et la détection de la trame AF1' facilitée.

L'entité EE1' décide donc, lors d'une étape E15', de ne pas émettre à nouveau la trame de données DF1'.

L'entité EE1' n'est pas la seule entité à recevoir la trame AF1' émise à l'instant T2' lors de l'étape E12'.

Lors d'une étape E16', l'entité ER2' reçoit aussi la trame d'acquittement AF1' au niveau de sa couche physique. La couche physique reconnait grâce au champ STF placé en premier qu'il s'agit d'une trame WiFi. Comme aucune autre information ne suit le champ STF dans la trame AF1', l'entité ER2' en déduit qu'il s'agit d'une trame d'acquittement.

Comme l'entité ER2' n'a pas émis de trame de données à un instant voisin de l'instant T1', elle détermine, lors d'une étape E17', que la trame AF1' ne lui est pas destinée, et l'ignore.

Au moment T2' précédent une étape E18', l'obstacle présent lors des étapes E1' et E1" a disparu. Lors de cette étape E18', l'entité EE2' reçoit donc aussi la trame d'acquittement AF1' au niveau de sa couche physique. Sur la base du délai écoulé entre l'étape E1" et l'étape E18', l'entité EE2' est en attente d'une trame d'acquittement composée d'un champ STF, car elle a émis une trame données DF1" à l'instant T1" mais ne sait pas que la trame DF1" n'a jamais été reçue par l'entité ER2'.

Lors d'une étape E19', l'entité EE2' calcule donc un score de corrélation entre la séquence d'information attendue et la séquence reçue. Grâce à la signature du canal de transmission entre les entités EE1' et ER1' présente dans la trame AF1', **propre à ce deuxième mode de réalisation** de l'invention, le score de corrélation est diminué pour les entités autres que EE1', en particulier pour l'entité EE2' où ce score n'atteint pas un seuil prédéterminé.

L'entité EE2' détermine donc que la trame d'acquittement AF1' ne lui est pas destinée, c'est-à-dire que la trame AF1' ne correspond pas à un acquittement, par l'entité ER2', de la trame de données DF1".

L'entité EE2' décide donc, lors d'une étape E2", d'émettre à nouveau la trame de données DF1".

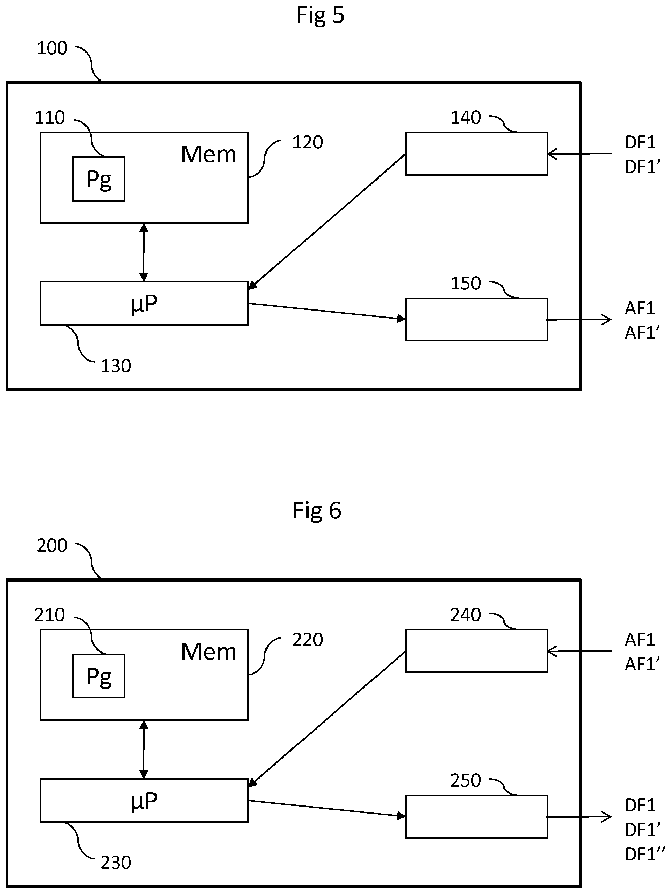

En relation avec la **figure 5****,** on présente maintenant la structure d'un dispositif émetteur d'une trame d'acquittement selon l'invention, un tel dispositif émetteur pouvant correspondre ou être inclus dans les entités réceptrices ER1, ER2, ER1' ou ER2' décrites précédemment.

Un tel dispositif émetteur 100 comprend :
- un module de réception 140, apte à recevoir une trame de données (DF1, DF1'),
- un module d'émission 150, apte à émettre une trame d'acquittement (AF1, AF1').

Les trames de données et d'acquittement sont traitées par une unité de traitement 130 équipée d'un microprocesseur apte à mettre en œuvre les moyens constitutifs de l'invention tels que décrits précédemment, en particulier, selon un aspect de l'invention, des moyens d'enregistrement d'une réponse temporelle du champ STF compris dans une trame de données, propre au canal de transmission, et des moyens de retournement temporel du champ STF se basant sur l'enregistrement de sa réponse temporelle.

Le dispositif émetteur 100 selon l'invention comprend en outre une mémoire 120 dans laquelle est stockée un programme d'ordinateur 110 mettant en œuvre les étapes du procédé d'émission d'une trame d'acquittement. A l'initialisation, les instructions de code du programme d'ordinateur 110 sont par exemple chargées dans une mémoire RAM, avant d'être exécutées par le processeur de l'unité de traitement 130.

En relation avec la **figure 6****,** on présente maintenant la structure d'un dispositif émetteur d'une trame de données, selon l'invention, un tel dispositif émetteur pouvant correspondre ou être inclus dans les entités émettrices EE1, EE2, EE1' ou EE2' décrites précédemment.

Ce dispositif émetteur 200 comprend :
- un module de réception 240, apte à recevoir une trame d'acquittement (AF1, AF1'),
- un module d'émission 250, apte à émettre une trame de données (DF1, DF1', DF1").

Les trames de données et d'acquittement sont traitées par une unité de traitement 230 équipée d'un microprocesseur apte à mettre en œuvre les moyens constitutifs de l'invention tels que décrits précédemment, en particulier, des moyens de corrélation entre une trame reçue et le champ STF.

Le dispositif émetteur 200 selon l'invention comprend en outre une mémoire 220 dans laquelle est stockée un programme d'ordinateur 210 mettant en œuvre les étapes du procédé d'émission d'une trame de données. A l'initialisation, les instructions de code du programme d'ordinateur 210 sont par exemple chargées dans une mémoire RAM, avant d'être exécutées par le processeur de l'unité de traitement 230.

Les exemples de réalisation de l'invention qui viennent d'être présentés ne sont que quelques uns des modes de réalisation envisageables. Ils montrent que l'invention permet de réduire très fortement la durée des acquittements et la place qu'ils prennent dans un canal de transmission entre entités émettrices et réceptrices, tout en rendant plus facile et plus robuste leur détection par les entités à qui ils sont destinés.

## Revendications

1. **Procédé d'émission d'une trame d'acquittement** par une entité réceptrice (ER1', ER2'), comprenant, suite à la réception d'une trame de données (DF1') émise par une entité émettrice (EE1', EE2') et comprenant un champ de synchronisation (STF) contenant une information invariante connue desdites entités et un champ d'identification (MAC_HDR) contenant des informations identifiant ladite entité émettrice et ladite entité réceptrice, une étape (E12') d'émission d'une trame d'acquittement (AF1') comprenant un champ de synchronisation, le procédé étant **caractérisé en ce qu'**il comprend en outre une étape (E11') de calcul d'une signature du canal de transmission entre l'entité émettrice (EE1', EE2') et l'entité réceptrice (ER1', ER2'), l'étape (E11') de calcul de la signature comprenant une étape de retournement de la réponse temporelle dudit canal, le champ de synchronisation de la trame d'acquittement (AF1') étant obtenu à partir du champ de synchronisation de la trame de données (DF1'), au moyen de ladite signature.

2. **Procédé d'émission d'une trame d'acquittement** selon la revendication 1, **caractérisé en ce que** le champ de synchronisation de la trame d'acquittement (AF1') comprend le champ de synchronisation (STF) de la trame de données (DF1').

3. **Procédé d'émission d'une trame d'acquittement** selon la revendication 1 **caractérisé en ce que** la signature est enregistrée à l'aide du champ de synchronisation de la trame de données (DF1').

4. **Procédé d'émission d'une trame de données** par une entité émettrice (EE1', EE2') vers une entité réceptrice (ER1', ER2'), la trame de données (DF1', DF1") comprenant un champ de synchronisation (STF) contenant une information invariante connue desdites entités et un champ d'identification (MAC_HDR) contenant des informations identifiant ladite entité émettrice et ladite entité réceptrice, le procédé comprenant au moins une étape (E1', E1", E2") d'émission de ladite trame de données, le procédé étant **caractérisé en ce que** ladite étape d'émission est répétée après un délai prédéterminé jusqu'à la réception, dans un intervalle temporel prédéterminé à l'intérieur dudit délai, d'une trame d'acquittement (AF1') comprenant un champ de synchronisation obtenu à partir du champ de synchronisation de la trame de données (DF1', DF1"), au moyen d'une signature du canal de transmission entre l'entité émettrice (EE1', EE2') et l'entité réceptrice (ER1', ER2'), la signature comprenant un retournement de la réponse temporelle dudit canal.

5. **Procédé d'émission d'une trame de données** selon la revendication 4, **caractérisé en ce que** le champ de synchronisation de la trame d'acquittement (AF1') comprend le champ de synchronisation (STF) de la trame de données (DF1', DF1").

6. **Procédé d'émission d'une trame de données** selon l'une des revendications 4 ou 5, **caractérisé par** une étape (E14', E19') de corrélation du champ de synchronisation de la trame d'acquittement (AF1') reçue avec le champ de synchronisation de la trame de données (DF1', DF1"), la répétition de l'émission de ladite trame de données étant inhibée en fonction du résultat de cette corrélation.

7. **Procédé d'émission** selon l'une des revendications 1 à 6, **caractérisé en ce que** la trame d'acquittement (AF1') comprend uniquement un champ de synchronisation (STF).

8. **Procédé d'émission** selon l'une des revendications 1 à 7, **caractérisé en ce que** l'information invariante du champ de synchronisation (STF) comprend uniquement des symboles arrangés pour synchroniser temporellement lesdites entités.

9. **Dispositif d'émission d'une trame d'acquittement** comprenant un module d'émission (150) configuré pour émettre une trame d'acquittement (AF1'), suite à la réception d'une trame de données (DF1') émise par une entité émettrice (EE1', EE2') et comprenant un champ de synchronisation (STF) contenant une information invariante, connue du dispositif d'émission et de l'entité émettrice, et un champ d'identification (MAC_HDR) contenant des informations identifiant ledit dispositif d'émission et ladite entité émettrice, **caractérisé en ce que** le dispositif comprend en outre une unité de traitement (130) apte à calculer une signature du canal de transmission entre l'entité émettrice (EE1', EE2') et l'entité réceptrice (ER1', ER2'), la signature étant calculée par retournement de la réponse temporelle dudit canal, le champ de synchronisation de la trame d'acquittement (AF1') étant obtenu à partir du champ de synchronisation de la trame de données (DF1'), au moyen de ladite signature.

10. **Dispositif d'émission d'une trame de données** comprenant un module d'émission (250) configuré pour émettre une trame de données (DF1', DF1") comprenant un champ de synchronisation (STF) contenant une information invariante connue du dispositif d'émission et d'une entité réceptrice et un champ d'identification (MAC_HDR) contenant des informations identifiant ledit dispositif d'émission et ladite entité réceptrice (ER1', ER2'), **caractérisé en ce que** le module d'émission est configuré pour répéter l'émission de ladite trame de données, après un délai prédéterminé, jusqu'à la réception, dans un intervalle temporel prédéterminé à l'intérieur dudit délai, d'une trame d'acquittement (AF1') comprenant un champ de synchronisation obtenu à partir du champ de synchronisation de la trame de données (DF1', DF1"), au moyen d'une signature du canal de transmission entre l'entité émettrice (EE1', EE2') et l'entité réceptrice (ER1', ER2'), la signature comprenant un retournement de la réponse temporelle dudit canal.

11. **Système d'acquittement de la transmission d'une trame de données, caractérisé en ce qu'**il comprend au moins un dispositif d'émission d'une trame d'acquittement selon la revendication 9 et au moins un dispositif d'émission d'une trame de données selon la revendication 10.

12. **Programme d'ordinateur, caractérisé en ce qu'**il comprend des instructions qui, lorsque le programme est exécuté par un ordinateur, conduisent celui-ci à mettre en œuvre du procédé d'émission d'une trame d'acquittement selon la revendication 1.

13. **Programme d'ordinateur, caractérisé en ce qu'**il comprend des instructions qui, lorsque le programme est exécuté par un ordinateur, conduisent celui-ci à mettre en œuvre le procédé d'émission d'une trame de données selon la revendication 4.

14. **Signal d'acquittement,** émis par une entité réceptrice (ER1', ER2') suite à la réception d'une trame de données (DF1') émise par une entité émettrice (EE1', EE2'), la trame de donnée comprenant un champ de synchronisation (STF) contenant une information invariante connue desdites entités et un champ d'identification (MAC_HDR) contenant des informations identifiant ladite entité émettrice et ladite entité réceptrice, le signal portant une trame d'acquittement (AF1') comprenant un champ de synchronisation obtenu à partir du champ de synchronisation de la trame de données, au moyen d'une signature du canal de transmission entre l'entité émettrice et l'entité réceptrice, la signature comprenant un retournement de la réponse temporelle dudit canal.

## Patentansprüche

1. Verfahren zum Senden eines Bestätigungsrahmens durch eine empfangende Entität (ER1', ER2'), welches im Anschluss an den Empfang eines Datenrahmens (DF1'), der von einer sendenden Entität (EE1', EE2') gesendet wurde und ein Synchronisationsfeld (STF), das eine den Entitäten bekannte invariante Information enthält, und ein Identifikationsfeld (MAC_HDR), das die sendende Entität und die empfangende Entität identifizierende Informationen enthält, umfasst, einen Schritt (E12') des Sendens eines Bestätigungsrahmens (AF1') umfasst, der ein Synchronisationsfeld umfasst, wobei das Verfahren **dadurch gekennzeichnet ist, dass** es außerdem einen Schritt (E11') der Berechnung einer Signatur des Übertragungskanals zwischen der sendenden Entität (EE1', EE2') und der empfangenden Entität (ER1', ER2') umfasst, wobei der Schritt (E11') der Berechnung der Signatur einen Schritt der Umkehrung der Zeitantwort des Kanals umfasst, wobei das Synchronisationsfeld des Bestätigungsrahmens (AF1') aus dem Synchronisationsfeld des Datenrahmens (DF1') mittels der Signatur erhalten wird.

2. Verfahren zum Senden eines Bestätigungsrahmens nach Anspruch 1, **dadurch gekennzeichnet, dass** das Synchronisationsfeld des Bestätigungsrahmens (AF1') das Synchronisationsfeld (STF) des Datenrahmens (DF1') umfasst.

3. Verfahren zum Senden eines Bestätigungsrahmens nach Anspruch 1, **dadurch gekennzeichnet, dass** die Signatur mithilfe des Synchronisationsfeldes des Datenrahmens (DF1') registriert wird.

4. Verfahren zum Senden eines Datenrahmens durch eine sendende Entität (EE1', EE2') an eine empfangende Entität (ER1', ER2'), wobei der Datenrahmen (DF1', DF1") ein Synchronisationsfeld (STF), das eine den Entitäten bekannte invariante Information enthält, und ein Identifikationsfeld (MAC_HDR), das die sendende Entität und die empfangende Entität identifizierende Informationen enthält, umfasst, wobei das Verfahren wenigstens einen Schritt (E1', E1", E2") des Sendens des Datenrahmens umfasst, wobei das Verfahren **dadurch gekennzeichnet ist, dass** der Schritt des Sendens nach einer vorbestimmten Verzögerung bis zum Empfang, in einem vorbestimmten Zeitintervall innerhalb der Verzögerung, eines Bestätigungsrahmens (AF1') wiederholt wird, der ein aus dem Synchronisationsfeld des Datenrahmens (DF1', DF1") mittels einer Signatur des Übertragungskanals zwischen der sendenden Entität (EE1', EE2') und der empfangenden Entität (ER1', ER2') erhaltenes Synchronisationsfeld umfasst, wobei die Signatur eine Umkehrung der Zeitantwort des Kanals umfasst.

5. Verfahren zum Senden eines Datenrahmens nach Anspruch 4, **dadurch gekennzeichnet, dass** das Synchronisationsfeld des Bestätigungsrahmens (AF1') das Synchronisationsfeld (STF) des Datenrahmens (DF1', DF1") umfasst.

6. Verfahren zum Senden eines Datenrahmens nach einem der Ansprüche 4 oder 5, **gekennzeichnet durch** einen Schritt (E14', E19') der Korrelation des Synchronisationsfeldes des empfangenen Bestätigungsrahmens (AF1') mit dem Synchronisationsfeld des Datenrahmens (DF1', DF1"), wobei die Wiederholung des Sendens des Datenrahmens in Abhängigkeit vom Ergebnis dieser Korrelation verhindert wird.

7. Verfahren zum Senden nach einem der Ansprüche 1 bis 6, **dadurch gekennzeichnet, dass** der Bestätigungsrahmen (AF1') ausschließlich ein Synchronisationsfeld (STF) umfasst.

8. Verfahren zum Senden nach einem der Ansprüche 1 bis 7, **dadurch gekennzeichnet, dass** die invariante Information des Synchronisationsfeldes (STF) ausschließlich Symbole umfasst, die so angeordnet sind, dass sie die Entitäten zeitlich synchronisieren.

9. Vorrichtung zum Senden eines Bestätigungsrahmens, welche ein Sendemodul (150) umfasst, das dafür ausgelegt ist, einen Bestätigungsrahmen (AF1') im Anschluss an den Empfang eines Datenrahmens (DF1') zu senden, der von einer sendenden Entität (EE1', EE2') gesendet wurde und ein Synchronisationsfeld (STF), das eine der Vorrichtung zum Senden und der sendenden Entität bekannte invariante Information enthält, und ein Identifikationsfeld (MAC_HDR), das die Vorrichtung zum Senden und die sendende Entität identifizierende Informationen enthält, umfasst, **dadurch gekennzeichnet, dass** die Vorrichtung außerdem eine Verarbeitungseinheit (130) umfasst, die in der Lage ist, eine Signatur des Übertragungskanals zwischen der sendenden Entität (EE1', EE2') und der empfangenden Entität (ER1', ER2') zu berechnen, wobei die Signatur durch Umkehrung der Zeitantwort des Kanals berechnet wird, wobei das Synchronisationsfeld des Bestätigungsrahmens (AF1') aus dem Synchronisationsfeld des Datenrahmens (DF1') mittels der Signatur erhalten wird.

10. Vorrichtung zum Senden eines Datenrahmens, welche ein Sendemodul (250) umfasst, das dafür ausgelegt ist, einen Datenrahmen (DF1', DF1") zu senden, der ein Synchronisationsfeld (STF), das eine der Vorrichtung zum Senden und einer empfangenden Entität bekannte invariante Information enthält, und ein Identifikationsfeld (MAC_HDR), das die Vorrichtung zum Senden und die empfangende Entität (ER1', ER2') identifizierende Informationen enthält, umfasst, **dadurch gekennzeichnet, dass** das Sendemodul dafür ausgelegt ist, das Senden des Datenrahmens nach einer vorbestimmten Verzögerung bis zum Empfang, in einem vorbestimmten Zeitintervall innerhalb der Verzögerung, eines Bestätigungsrahmens (AF1') zu wiederholen, der ein aus dem Synchronisationsfeld des Datenrahmens (DF1', DF1") mittels einer Signatur des Übertragungskanals zwischen der sendenden Entität (EE1', EE2') und der empfangenden Entität (ER1', ER2') erhaltenes Synchronisationsfeld umfasst, wobei die Signatur eine Umkehrung der Zeitantwort des Kanals umfasst.

11. System zur Bestätigung der Übertragung eines Datenrahmens, **dadurch gekennzeichnet, dass** es wenigstens eine Vorrichtung zum Senden eines Bestätigungsrahmens nach Anspruch 9 und wenigstens eine Vorrichtung zum Senden eines Datenrahmens nach Anspruch 10 umfasst.

12. Computerprogramm, **dadurch gekennzeichnet, dass** es Anweisungen umfasst, welche, wenn das Programm von einem Computer ausgeführt wird, bewirken, dass dieser das Verfahren zum Senden eines Bestätigungsrahmens nach Anspruch 1 durchführt.

13. Computerprogramm, **dadurch gekennzeichnet, dass** es Anweisungen umfasst, welche, wenn das Programm von einem Computer ausgeführt wird, bewirken, dass dieser das Verfahren zum Senden eines Datenrahmens nach Anspruch 4 durchführt.

14. Bestätigungssignal, welches von einer empfangenden Entität (ER1', ER2') im Anschluss an den Empfang eines Datenrahmens (DF1'), der von einer sendenden Entität (EE1', EE2') gesendet wurde, gesendet wird, wobei der Datenrahmen ein Synchronisationsfeld (STF), das eine den Entitäten bekannte invariante Information enthält, und ein Identifikationsfeld (MAC_HDR), das die sendende Entität und die empfangende Entität identifizierende Informationen enthält, umfasst, wobei das Signal einen Bestätigungsrahmen (AF1') trägt, der ein aus dem Synchronisationsfeld des Datenrahmens mittels einer Signatur des Übertragungskanals zwischen der sendenden Entität und der empfangenden Entität erhaltenes Synchronisationsfeld umfasst, wobei die Signatur eine Umkehrung der Zeitantwort des Kanals umfasst.

## Claims

1. Method of sending of an acknowledgment frame by a receiving entity (ER1', ER2'), comprising, subsequent to the reception of a data frame (DF1') sent by a sending entity (EE1', EE2') and comprising a synchronization field (STF) containing an invariant item of information known to said entities and an identification field (MAC_HDR) containing information identifying said sending entity and said receiving entity, a step (E12') of sending an acknowledgment frame (AF1') comprising a synchronization field, the method being **characterized in that** it furthermore comprises a step (E11') of calculating a signature of the transmission channel between the sending entity (EE1', EE2') and the receiving entity (ER1', ER2'), the step (E11') of calculating the signature comprising a step of reversing the temporal response of said channel, the synchronization field of the acknowledgment frame (AF1') being obtained on the basis of the synchronization field of the data frame (DF1'), by means of said signature.

2. Method of sending of an acknowledgment frame according to Claim 1, **characterized in that** the synchronization field of the acknowledgment frame (AF1') comprises the synchronization field (STF) of the data frame (DF1').

3. Method of sending of an acknowledgment frame according to Claim 1, **characterized in that** the signature is recorded with the aid of the synchronization field of the data frame (DF1').

4. Method of sending of a data frame by a sending entity (EE1', EE2') to a receiving entity (ER1', ER2'), the data frame (DF1', DF1") comprising a synchronization field (STF) containing an invariant item of information known to said entities and an identification field (MAC_HDR) containing information identifying said sending entity and said receiving entity, the method comprising at least one step (E1', E1", E2") of sending said data frame, the method being **characterized in that** said sending step is repeated after a predetermined interval until the reception, in a predetermined time slot inside said interval, of an acknowledgment frame (AF1') comprising a synchronization field obtained on the basis of the synchronization field of the data frame (DF1', DF1"), by means of a signature of the transmission channel between the sending entity (EE1', EE2') and the receiving entity (ER1', ER2'), the signature comprising a reversal of the temporal response of said channel.

5. Method of sending of a data frame according to Claim 4, **characterized in that** the synchronization field of the acknowledgment frame (AF1') comprises the synchronization field (STF) of the data frame (DF1', DF1").

6. Method of sending of a data frame according to one of Claims 4 or 5, **characterized by** a step (E14', E19') of correlating the synchronization field of the acknowledgment frame (AF1') received with the synchronization field of the data frame (DF1', DF1"), the repetition of the sending of said data frame being inhibited as a function of the result of this correlation.

7. Method of sending according to one of Claims 1 to 6, **characterized in that** the acknowledgment frame (AF1') comprises solely a synchronization field (STF).

8. Method of sending according to one of Claims 1 to 7, **characterized in that** the invariant item of information of the synchronization field (STF) comprises solely symbols arranged so as to temporally synchronize said entities.

9. Device for sending an acknowledgment frame comprising a sending module (150) configured to send an acknowledgment frame (AF1'), subsequent to the reception of a data frame (DF1') sent by a sending entity (EE1', EE2') and comprising a synchronization field (STF) containing an invariant item of information, known to the sending device and to the sending entity, and an identification field (MAC_HDR) containing information identifying said sending device and said sending entity, **characterized in that** the device furthermore comprises a processing unit (130) able to calculate a signature of the transmission channel between the sending entity (EE1', EE2') and the receiving entity (ER1', ER2'), the signature being calculated by reversal of the temporal response of said channel, the synchronization field of the acknowledgment frame (AF1') being obtained on the basis of the synchronization field of the data frame (DF1'), by means of said signature.

10. Device for sending of a data frame comprising a sending module (250) configured to send a data frame (DF1', DF1") comprising a synchronization field (STF) containing an invariant item of information known to the sending device and to a receiving entity and an identification field (MAC_HDR) containing information identifying said sending device and said receiving entity (ER1', ER2'), **characterized in that** the sending module is configured to repeat the sending of said data frame, after a predetermined interval, until the reception, in a predetermined time slot inside said interval, of an acknowledgment frame (AF1') comprising a synchronization field obtained on the basis of the synchronization field of the data frame (DF1', DF1"), by means of a signature of the transmission channel between the sending entity (EE1', EE2') and the receiving entity (ER1', ER2'), the signature comprising a reversal of the temporal response of said channel.

11. System for acknowledging the transmission of a data frame, **characterized in that** it comprises at least one device for sending an acknowledgment frame according to Claim 9 and at least one device for sending a data frame according to Claim 10.

12. Computer program, **characterized in that** it comprises instructions which, when the program is executed by a computer, cause said computer to implement the method of sending of an acknowledgment frame according to Claim 1.

13. Computer program, **characterized in that** it comprises instructions which, when the program is executed by a computer, cause said computer to implement the method of sending of a data frame according to Claim 4.

14. Acknowledgement signal, sent by a receiving entity (ER1', ER2') subsequent to the reception of a data frame (DF1') sent by a sending entity (EE1', EE2'), the data frame comprising a synchronization field (STF) containing an invariant item of information known to said entities and an identification field (MAC_HDR) containing information identifying said sending entity and said receiving entity, the signal carrying an acknowledgment frame (AF1') comprising a synchronization field obtained on the basis of the synchronization field of the data frame, by means of a signature of the transmission channel between the sending entity and the receiving entity, the signature comprising a reversal of the temporal response of said channel.
